(19) Europäisches Patentamt
European Patent Office
Office européen des brevets

(11) Publication number: 0 250 212 A1

(12) **EUROPEAN PATENT APPLICATION**

(21) Application number: 87305345.8

(22) Date of filing: 16.06.87

(51) Int. Cl.4: C08F 210/16 , C08F 4/64

(30) Priority: 16.06.86 JP 138255/86

(43) Date of publication of application: 23.12.87 Bulletin 87/52

(84) Designated Contracting States: BE DE FR GB IT NL SE

(71) Applicant: TOA NENRYO KOGYO KABUSHIKI KAISHA
1-1 Hitotsubashi, 1-Chome Chiyoda-Ku
Tokyo 100(JP)

(72) Inventor: Ueki, Satoshi
4-7-301 Tate 2-chome
Shiki-shi Saitama-ken(JP)
Inventor: Maruyama, Kouji
13-8, Chuou 2-chome
Kamifukuoka-shi Saitama-ken(JP)
Inventor: Mizukami, Haruo
71 Higashifukai
Nagareyama-shi Chiba-ken(JP)

(74) Representative: Dew, Melvyn John et al
Exxon Chemical Limited Exxon Chemical Technology Centre P.O. Box 1
Abingdon Oxfordshire, OX13 6BB(GB)

(54) **Process for producing ethylenepropylene copolymer rubber.**

(57) A process for producing an ethylene-propylene copolymer rubber containing 15-90 mol% of ethylene, said process comprising copolymerizing ethylene and propylene in the presence of a polymerization catalyst composed of a catalyst component and an organoaluminum compound, said catalyst component being obtained by contacting (A) a metal oxide, (B) an organomagnesium compound, and (C) a hydrocarbyloxy group-containing compound with one another, and contacting the thus obtained contact product with (D) a titanium compound.

EP 0 250 212 A1

## PROCESS FOR PRODUCING ETHYLENE-PROPYLENE COPOLYMER RUBBER

There is known a process for producing an ethylene-propylene copolymer rubber by copolymerizing ethylene and propylene with a high-activity titanium-based catalyst in place of the conventional vanadium-based catalyst.

Recently, several attempts have been made to produce said copolymer rubber with a titanium-based catalyst supported on a magnesium compound. However, the process involved is comlpex and the polymer obtained by the process has such a low bulk density that it is not of practical use.

On the other hand, there have been reported processes primarily for the production of polymers having good particle properties. They are produced by copolymerization, especially gas-phase polymerization, of ethylene and propylene using a catalyst component formed by supporting a titanium component on a metal oxide such as silica.

According to a disclosure in G.B. 2,133,020, for example, the process employs a solid catalyst component

formed by contacting (1) a metal oxide, (2) a reaction product of a magnesium halide and a compound represented by the formula $Me(OR)_nX_{z-n}$, (3) a silicon compound represented by the formula below

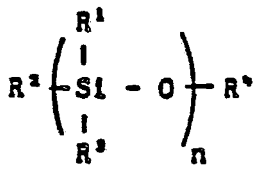

and (4) a titanium compound with one another. According to another disclosure in European Patent Application 20,503, the process employs a catalyst formed by diluting a composition represented by the formula $Mg_mTi(OR_nX_p(ED)_q$ (where X denotes a halogen and ED denotes an electron donor compound) with a metal oxide and activating the diluted composition with an organoaluminum compound.

The above-mentioned titanium-based catalyst supported on a metal oxide provides a copolymer which is improved to a certain extent in particle properties; however, it still has a disadvantage of forming the copolymer in a rather smaller quantity per unit weight thereof.

There is a desideratum to provide a process for producing in a good yield an ethylene-propylene copolymer rubber superior in particle properties by using a titanium-based catalyst supported on a metal oxide. The present invention comprises copolymerizing ethylene and propylene with a catalyst component disclosed in EP-A-173470, the contents or which are hereby incorporated by reference.

The catalyst component exhibits outstanding performance in the production of crystalline polyethylene and crystalline copolymer of ethylene and a small amount of α-olefin. It is obtained by contacting (a) a metal oxide, (b) an organomagnesium compound, and (c) a hydrocarbyloxy group-containing compound with one another, and contacting the thus obtained contact product with (d) a titanium compound. This discovery led to the present invention.

Fig. 1 is a flowchart showing the process of the invention.

The gist of the present invention resides in a process for producing an ethylene-propylene copolymer rubber containing 15-90 mol% of ethylene, said process comprising copolymerizing ethylene and propylene in the presence of a polymerization catalyst composed of a catalyst component and an organoaluminum compound, said catalyst component being obtained by contacting (A) a metal oxide, (B) an organomagnesium compound, and (C) a hydrocarbyloxy group-containing compound with one another, and contacting the thus obtained contact product with (D) a titanium compound.

Raw materials for the catalyst component

(A) Metal oxide

The metal oxide used in the present invention is preferably an oxide of a metal selected from the group of elements belonging to Groups II to IV of the periodic table. It includes, for example, $B_2O_3$, MgO, $Al_2O_3$, $SiO_2$, CaO, $TiO_2$, ZnO, $ZrO_2$, $SnO_2$, BaO, and $ThO_2$. Preferable among them are $B_2O_3$, MgO, $Al_2O_3$, $SiO_2$, $TiO_2$, and $ZrO_2$. Especially preferable is $SiO_2$. Additional examples of the metal oxides are complex oxides containing these metal oxides, for example, $SiO_2$-MgO, $SiO_2$-$Al_2O_3$, $SiO_2$-$TiO_2$, $SiO_2$-$V_2O_3$, $SiO_2$-$Cr_2O_3$, and $SiO_2$-$TiO_2$-MgO.

The above-mentioned metal oxides and complex oxides should preferably be anhydrous in principle. However, they may contain a very small amount of hydroxide which is usually present. In addition, they may contain impurities in such an amount that they do not considerably impair the properties of the metal oxides. The permissible impurities are oxides, carbonates, sulfates, and nitrates such as sodium oxide, potassium oxide, lithium oxide, sodium carbonate, potassium carbonate, calcium carbonate, magnesium carbonate, sodium sulfate, aluminum sulfate, barium sulfate, potassium nitrate, magnesium nitrate, and aluminum nitrate.

These metal oxides should preferably be in the form of a powder with low crystallinity that gives a broad X-ray diffraction pattern or an amorphous powder. The particle size and shape of the powder should be properly controlled because they affect the form of the resulting olefin polymer. The powder should have a great specific surface area, pore volume, and average pore diameter. In addition, the metal oxide should preferably be calcined, prior to use, at as high a temperature as possible to remove poisonous substances, and the calcined metal oxide should be isolated from the atmosphere during handling.

(B) Organomagnesium compound

The organomagnesium compound used in the present invention is preferably one represented by the formula RMgR', wherein R denotes a hydrocarbon group (alkyl,cycloalkyl,aryl and aralkyl) having 1 to 20 carbon atoms, and R' denotes a hydrocarbon group (alkyl,cycloalkyl,aryl and aralkyl) having 1 to 20 carbon atoms or a halogen atom.

Examples of the organomagnesium compound in which both R and R' are hydrocarbon groups are shown below. Dimethylmagnesium (magnesium is abbreviated as Mg hereinafter), diethyl Mg, ethyl methyl Mg, dipropyl Mg, diisopropyl Mg, ethyl propyl Mg, dibutyl Mg, diisobutyl Mg, di-sec-butyl Mg, di-tert-butyl Mg, butyl ethyl Mg, butyl propyl Mg, sec-butyl ethyl Mg, tert-butyl isopropyl Mg, sec-butyl tert-butyl Mg, dipentyl Mg, diisopentyl Mg, ethyl pentyl Mg, isopropyl pentyl Mg, sec-butyl pentyl Mg, dihexyl Mg, ethyl hexyl Mg, butyl hexyl Mg, tert-butyl hexyl Mg, (2-ethylbutyl) ethyl Mg, (2,2-diethylbutyl) ethyl Mg, diheptyl Mg, dioctyl Mg, di-2-ethylhexyl Mg, didecyl Mg, dicyclohexyl Mg, cyclohexyl ethyl Mg, butyl cyclohexyl Mg, di(methylcyclohexyl) Mg, diphenyl Mg, ethyl phenyl Mg, butyl phenyl Mg, sec-butyl phenyl Mg, ditolyl Mg, ethyl tolyl Mg, dixylyl Mg, dibenzyl Mg, benzyl tert-butyl Mg, diphenethyl Mg, and ethyl phenethyl Mg.

These organomagnesium compounds may be used in the form of mixture or complex compound with an organic compound of other metals which is represented by the formula $MR_n$ (wherein M denotes boron, beryllium, aluminum, or zinc; R denotes an alkyl, cycloalkyl, aryl, or aralkyl group having 1 to 20 carbon atoms; and n denotes the valence of the metal M). Their examples include triethyl aluminum, tributyl aluminum, triisobutyl aluminum, triphenyl aluminum, triethyl boron, tributyl boron, diethyl beryllium, diisobutyl beryllium, diethyl zinc, and dibutyl zinc.

Where the organomagnesium is used in the form of a mixture or complex compound with an organic compound of other metals, the amount of other metals is usually less than 2 gram atom, preferably less than 1 gram atom, for 1 gram atom of magnesium.

Examples of the organomagnesium compound in which both R is a hydrocarbon group and R' is a halogen atom are shown below. (Magnesium chloride, magnesium bromide, and magnesium iodide are abbreviated as MgCl, MgBr, and MgI, respectively, hereinafter.) Methyl MgCl, ethyl MgCl, propyl MgCl, isopropyl MgCl, butyl MgCl, isobutyl Mg-Cl sec-butyl MgCl, tert-butyl MgCl, pentyl MgCl, hexyl MgCl, 2-ethylhexyl MgCl, octyl MgCl, decyl MgCl, cyclohexyl MgCl, phenyl MgCl, tolyl MgCl, methylcyclohexyl MgCl, xylyl MgCl, benzyl MgCl, ethyl MgBr, isopropyl MgBr, butyl MgBr, sec-butyl MgBr, tert-butyl MgBr, hexyl MgBr, octyl MgBr, cyclohexyl MgBr, phenyl MgBr, ethyl MgI, butyl MgI, isobutyl MgI, sec-butyl MgI, 2-ethylhexyl MgI, and phenyl MgI.

(C) Hydrocarbyloxy group-containing compound

The hydrocarbyloxy group-containing compound used in the present invention is preferably represented by the formula $X_mC(OR)_{4-m}$ (wherein X denotes a hydrogen atom, a halogen atom, or a hydrocarbon group (alkyl, cycloalkyl, aryl or alalkyl) having 1 to 20 carbon atoms or a halogen-substituted compound thereof; R denotes an alkyl, cycloalkyl, aryl, or alalkyl group having 1 to 20 carbon atoms; and m denotes a number of 0, 1, or 2. Examples of the hydrocarbyloxy group-containing compound in which m is 0, 1, and 2 are given below.

In the case where m is 0: $C(OR)_4$ such as orthocarbonic acid ester in which R is a methyl, ethyl, propyl, butyl, isobutyl, sec-butyl, hexyl, octyl, cyclohexyl, or phenyl group.

In the case where m is 1: $XC(OR)_3$ such as orthoformic acid ester in which R is a methyl, ethyl, propyl, butyl, hexyl, octyl, nonyl, cyclohexyl, or phenyl group (with X being a hydrogen atom); methyl orthoacetate, ethyl orthoacetate, methyl orthopropionate, butyl orthopropionate, $C_4H_{11}C(OC_2H_3)_3$, $C_6H_3C(OCH_3)_3$, $C_6H_3C(CC_2H_3)_3$, $C_6H_3C(OC_3H_7)_3$, $C_7H_7C(OC_2H_3)_3$, and $C_8H_9C(OC_2H_3)_3$ (with X being a hydrocarbon group); ethyl orthobromoacetate, ethyl orthochloroacetate, ethyl ortho-α-bromopropionate, and ethyl ortho-α-chloropropionate (with X being a halogen-substituted hydrocarbon group); and methy orthochloroformate, ethyl orthochloroformate, propyl orthochloroformate, isobutyl orthochoroformate, octyl orthochloroformate, phenyl orthochloroformate, and ethyl orthobromoformate (with X being a halogen atom).

In the case where m is 2: $X_2C(OR)_2$ such as ethylidene dimethyl ether, ethylidene diethyl ether, methylal, methylene diethyl ether, monochloroacetal, dichloroacetal, trichloroacetal, monobromoacetal, monoiodoacetal, and benzaldehyde diethylacetal.

Preferable among the above-mentioned compounds are lower alkyl esters of orthocarbonic acid such as methyl orthocarbonate ethyl orthocarbonate, and butyl orthocarbonate; lower alkyl esters of orthoformic acid such as methyl orthoformate, ethyl orthoformate, and butyl orthoformate; and lower alkyl esters of orthoacetic acid such as methyl orthoacetate, ethyl orthoacetate, and butyl orthoacetate.

(D) Titanium compound

The titanium compound is divalent, trivalent, or tetravalent titanium compound. Their examples include titanium tetrachloride, titanium tetrabromide, trichloroethoxytitanium, trichlorobutoxytitanium, dichlorodiethyoxytitanium, dichlorodibutoxytitanium, dichlorodiphenoxytitanium, chlorotriethoxytitanium, chlorotributoxytitanium, tetrabutoxytitanium, and titanium trichloride. Preferable among them are tetravalent titanium halides such as titanium tetrachloride, trichloroethoxytitanium, dichlorodibutoxytitanium, and dichlorodiphenoxytitanium. Particularly preferable is titanium tetrachloride.

Preparation of catalyst component

The preparation of the catalyst component used in the present invention involves the steps of contacting a metal oxide (referred to as component A hereinafter), an organomagnesium compound (referred to as component B hereinafter), and a hydrocarbyloxy group-containing compound (referred to as component C hereinafter) with one another, and contact ing the resulting contact product with a titanium compound (referred to as component D hereinafter).

Contacting of components A, B, and C with one another

There are the following four methods for contacting components A, B, and C with one another.

(1) Components A and B are contacted with each other and the resulting contact product is contacted with component C.

(2) Components A and C are contacted with each other and the resulting contact product is contacted with component B.

(3) Components B and C are contacted with each other and the resulting contact product is contacted with component A.

(4) Components A, B, and C are contacted with one another simultaneously.

The first method is preferable.

The above-mentioned contacting may be accomplished by mixing and stirring or mechanically copulverizing the three components in the presence or absence of an inert medium. Examples of the inert medium include hydrocarbons such as pentane, hexane, heptane, octane, decane, cyclohexane, benzene, toluene, and xylene; and halogenated hydrocarbons such as 1,2-dichloroethane, 1,2-dichloropropane, carbon tetrachloride, butyl chloride, isoamyl chloride, bromobenzene, and chlorotoluene. The contacting of components A,B and C with one another is preferably performed at -20°C to +150°C preferably for 0.1 to 100 hours, more preferably at room temperature to 110°C for eg. 0.5 to 10 hours. Where the contacting involves heat generation, it may be performed in such a manner that the components are mixed little by little at a low temperature in the initial stage, and after the mixing of the entire components is complete, the temperature is raised and contacting is continued. At the interval between the contacting steps, the contact product may be washed with one of the above-mentioned inert media.

A ratio of components A, B and C for contact may be as follows: A/B -1 g/0.1 to 100 mmol, preferably 1 g/1 to 10 mmol. A/C = 1 g/2 to 100 mmol, preferably 1 g/10 to 50 mmol. C/B (molar ratio) = 0.05 to 100, preferably 0.1 to 50.

The contacting of components A, B, and C produces a solid product (referred to as product I hereinafter). If necessary, it may be washed with a proper cleaning agent, e.g., one of the above-mentioned inert media, before it undergoes the subsequent contacting step.

Contacting of product I with component D

The contacting of product I with component D may be accomplished by mixing and stirring or mechanically copulverising them in the presence or absence of an inert medium. Contacting by mixing and stirring in the presence of an inert medium is preferable. One of the above-mentioned inert media may also be used.

The ratio of contacting product I with component D is preferably more than 0.01 gram-mol, preferably 0.1 to 10 gram-mol for 1 gram-atom of magnesium in product I. Their contacting may be performed at 0°C to 200°C for eg 0.5 to 20 hours, preferably at 60°C to 150°C and preferably for 1 to 5 hours in the case of mixing and stirring in the presence of an inert medium.

The contacting of product I with component D may be performed twice or more in the same manner as mentioned above. If necessary, the previous contact product may be washed with an inert medium, and component D (and the medium) may be freshly added.

The contact reaction product obtained as mentioned above may be washed, if necessary, with a hydrocarbon such as hexane, heptane, octane, cyclohexane, benzene, toluene, and xylene, followed by drying, if necessary, before it is used as the catalyst component in the present invention.

Polymerization catalyst

The polymerization catalyst used in the present invention is a combination of the catalyst component obtained as mentioned above and an organoaluminum compound.

The usuable organoaluminum compound is preferably represented by the formula $R_nAlX_{3-n}$ (wherein R is an alkyl or aryl group; X is a halogen atom, alkoxyl group, or hydrogen atom; and n is a number in the range of $1 \leq n \leq 3$). The examples are alkyl aluminum compounds having 1 to 18 carbon atoms, preferably 2 to 6 carbon atoms, such as trialkyl aluminum, dialkyl aluminum monohalide, monoalkyl aluminum dihalide, alkyl aluminum sesquihalide, dialkyl aluminum monoalkoxide, and dialkyl aluminum monohydride, and mixtures thereof and complex compounds thereof. The specific examples include trialkyl aluminum such as trimethyl aluminum, triethyl aluminum, tripropyl aluminum, triisobutyl aluminum, and trihexyl aluminum; dialkyl aluminum monohalide such as dimethyl aluminum chloride, diethyl aluminum chloride, diethyl aluminum bromide, diethyl aluminum iodide, and diisobutyl aluminum chloride; monoalkyl aluminum dihalide such as methyl aluminum dichloride, ethyl aluminum dichloride, methyl aluminum dibromide, ethyl aluminum dibromide, ethyl aluminum diiodide, and isobutyl aluminum dichloride; alkyl aluminum sesquihalide such as ethyl aluminum sesquichloride; dialkyl aluminum monoalkoxide such as dimethyl aluminum methoxide, diethyl aluminum ethoxide, diethyl aluminum phenoxide, dipropyl aluminum ethoxide, diisobutyl aluminum ethoxide, and diisobutyl aluminum phenoxide; and dialkyl aluminum hydride such as dimethyl aluminum hydride, diethyl aluminum hydride, dipropyl aluminum hydride, and diisobutyl aluminum hydride.

Preferable among these compounds are trialkyl aluminum compounds, particularly triethyl aluminum and triisobutyl aluminum. The trialkyl aluminum may be used in combination with other organoaluminum compounds such as commercially available diethyl aluminum chloride, ethyl aluminum dichloride, ethyl aluminum sesquichloride, diethyl aluminum ethoxide, and diethyl aluminum hydride, or a mixture thereof or a complex compound thereof.

Another organoaluminum compound that can be used is one in which two or more aluminum atoms are connected through an oxygen atom or nitrogen atom. Examples of such compounds are $(C_2H_5)_2AlOAl(C_2H_5)_2$, $(C_4H_9)_2AlOAl(C_4H_9)_2$, and

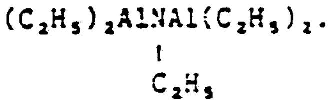

The organoaluminum compounds may be used alone or in combination with an electron donor compound. The electron donor compound may be any of carboxylic acids, carboxylic acid anhydrides, carboxylic acid esters, carboxylic acid halides, alcohols, ethers, ketones, amines, amides, nitriles, aldehydes, alcoholates, phosphamides, thioethers, thioesters, carbonic acid esters, and compounds of phosphorus, arsenic, or antimony attached to an organic group through a carbon or oxygen atom. Other electron donor compounds that can be used include organosilicon compounds and those compounds containing a hetero atom such as nitrogen, sulfur, oxygen, and phosphorus.

Two or more kinds of the electron donor compounds may be used. They may be used when the catalyst component is combined with an organoaluminum compound or used after the contacting with an organoaluminum compound.

The organoaluminum compound is used usually in an amount of 1 to 2000 gram-mol, particularly 20 to 500 gram-mol, per gram-atom of titanium in the catalyst component of the present invention. The amount of the organaluminum compound is preferably 0.1 to 40 gram-atom, more preferably 1 to 25 gram-atom in terms of aluminum per mol of the electron donor compound.

The catalyst component used in the present invention may be in the form of combination with an ethylene polymer and/or propylene polymer formed by preliminary polymerization in the presence of an organoaluminum compound and, if necessary, an electron donor compound. The amount of the polymer is preferably 0.1 to 100g, more preferably 1 to 50g, for 1g of the catalyst component. The preliminary polymerisation my be performed by the ordinary process for the polymerization of the olefins with a Ziegler-Natta catalyst.

<u>Copolymerization of ethylene and propylene</u>

The copolymerization of ethylene and propylene may be performed in the same way that ethylene and propylene are copolymerized with a common Ziegler-Natta catalyst. However, the preferred copolymerization process is the bulk polymerization that employs propylene as a medium and the gas-phase polymerization.

The copolymerization is preferably performed at -80°C to +150°C, more preferably 0°C to 80°C, and preferably under a pressure up to 60 atm. The ethylene-propylene copolymer rubber obtained by the process of the present invention contains 15-90 mol% of ethylene. This ethylene content may be obtained when the ethylene/propylene molar ratio is 0.01-1.0 (in liquid phase) in the case of bulk polymerization in a medium of propylene or 0.03-3.0 in the case of gas-phase polymerization.

The copolymerization may be performed continuously or batchwise in one step or in two or more steps.

The process of the present invention generally provides in high yields an ethylene-propylene copolymer rubber having good particle properties, which does not need the step for removing the catalyst.

<u>Examples</u>

The invention is now described in more detail with reference to the following examples, which are not intended to limit the scope of the invention. Percent (%) in the examples means wt%, unless otherwise indicated.

The ethylene content in the polymer was determined by infrared spectrophotometry. Melt index (MI) was measured according to ASTM D1238, and bulk density was measured according to ASTM D1895-69, method A. Heat of fusion was measured with DSC IIc made by Perkin-Elmer Co., Ltd. True density was measured according to ASTM D1505.

Example 1

Preparation of catalyst component

Contacting of silicon oxide with n-butyl ethyl magnesium

In a 200-ml flask equipped with a dropping funnel and stirrer, with the atmosphere therein replaced with nitrogen, was placed 5 g of silicon oxide ($SiO_2$) (G-952, a product of DAVISON, having a specific surface area of 302 $m^2/g$, a pore volume of 1.54 $cm^3/g$, and an average pore radius of 204 A. Prior to use, it was calcined in a nitrogen stream at 200°C for 2 hours, and then at 700°C for 5 hours.) and 20 ml of 20% solution of n-butylethyl magnesium (abbreviated as BEM hereinafter) in n-heptane (MAGALA BEM, a product of Texas Alkyls, the solution containing 26.8 mmol of BEM), followed by stirring at 90°C for 1 hour.

Contacting with ethyl orthoformate

The resulting suspension was cooled to room temperature. To the suspension was added dropwise 50 ml of n-hexane and 20 ml of ethyl orthoformate, followed by stirring at 50°C for 1 hour. The supernatant liquid was discarded and the solid product was washed three times with 50 ml of n-hexane at 50°C.

Contacting with titanium tetrachloride

To the solid product obtained in the above-mentioned step were added 20 ml of toluene and 50 ml of titanium tetrachloride, followed by stirring at 90°C for 2 hours. The supernatant liquid was discarded and the solid product was washed five times with 100 ml of n-hexane, followed by drying under reduced pressure at 65°C for 1 hour. There was obtained 6.5 g of catalyst component (a) containing 5.2% of magnesium, 5.5% of titanium, and 18.8% of chlorine.

Copolymerization of ethylene and propylene

Into a 1.5-liter autoclave equipped with a stirrer, with the atmosphere therein replaced by nitrogen, were placed 800 ml of liquefied propylene, a glass ampoule containing 5 mg of catalyst component (a), and 1.0 mmol of triethyl aluminum (TEAL). 100 ml of hydrogen and ethylene sufficient to establish an ethylene-propylene molar ratio of 0.10 in the liquid phase were introduced, and the autoclave was pressurized to 14.0 $kg/cm^2$. As the stirrer began to rotate, the glass ampoule was broken and copolymerization was initiated. During copolymerization, ethylene was supplied continuously so that the ethylene-propylene molar ratio was kept at 0.10. Copolymerization was carried out at 20°C. One hour later, the autoclave was depressured and the resulting polymer was discharged, followed by drying. The polymerization activity was 26.3 kg/g-catalyst component (a)-hour. The polymer thus obtained was in the form of spherical granules. It has the following characteristic properties.
Bulk density: 0.33 $g/cm^3$
Melt index: 0.23 g/10 min
True density: 0.863 $g/cm^3$
Ethylene content: 55 mol%
According to the differential thermal analysis, the polymer was found to have no Tm attributable to the ethylene chain. In addition, the polymer did not give a peak at 730 $cm^{-1}$ characteristic of crystalline polyethylene in IR spectrometry.

Examples 2 to 5

Copolymerization of ethylene and propylene was carried out in the same manner as in Example 1, except that the conditions of copolymerization were changed as shown in Table 1. The results are shown in Table 1.

Example 6

Copolymerization of ethylene and propylene was carried out in the same manner as in Example 1, except that TEAL was replaced by triisobutyl aluminum (TIBAL). The results are shown in Table 1.

Examples 7 to 9

Preparation of catalyst component

Catalyst component (b) containing 3.6% of titanium was prepared in the same manner as in Example 1, except that BEM was replaced by n-butylmagnesium chloride.

Copolymerization of ethylene and propylene

Copolymerization of ethylene and propylene was performed in the same manner as in Example 1, except that the catalyst component (b) obtained as mentioned above was used and the conditions of copolymerization were changed as shown in Table 1. The results are shown in Table 1.

Example 10

Preparation of catalyst component

Catalyst component (c) containing 5.7% of titanium was prepared in the same manner as in Example 1, except that the $SiO_2$ was replaced by $Al_2O_3$ formed by calcination in a nitrogen stream at 200°C for 2 hours and subsequently at 700°C for 5 hours.

Copolymerization of ethylene and propylene

Copolymerization of ethylene and propylene was performed in the same manner as in Example 1, except that the catalyst component (c) obtained as mentioned above was used and the conditions of copolymerization were changed as shown in Table 1. The results are shown in Table 1.

Examples 11 and 12

Preparation of catalyst component

Catalyst components (d) and (e) were prepared in the same manner as in Example 1, except that the ethyl orthoformate was replaced by the following hydrocarbyloxy group-containing compound.

| Example No. | Catalyst component | Hydrocarbyloxy group-containing compound | Titanium content (%) |
|---|---|---|---|
| 11 | (d) | Ethyl orthocarbonate | 5.3 |
| 12 | (e) | Ethyl orthoacetate | 5.6 |

Copolymerization of ethylene and propylene

Copolymerization of ethylene and propylene was performed in the same manner as in Example 1, except that the catalyst components obtained as mentioned above were used and the conditions of copolymerization were changed as shown in Table 1. The results are shown in Table 1.

Examples 13 and 14

Preparation of catalyst component

Catalyst components (f) and (g) were prepared in the same manner as in Example 1, except that the ethyl orthoformate was replaced by the following hydrocarbyloxy group-containing compound.

| Example No. | Catalyst component | Hydrocarbyloxy group-containing compound | Titanium content (%) |
|---|---|---|---|
| 13 | (f) | Ethyl orthoacetate | 3.4 |
| 14 | (g) | Ethyl orthocarbonate | 3.5 |

Copolymerization of ethylene and propylene

Copolymerization of ethylene and propylene was performed in the same manner as in Example 1, except that the catalyst components obtained as mentioned above were used and the conditions of copolymerization were changed as shown in Table 1. The results are shown in Table 1.

Examples 15 and 16

Preparation of catalyst component

Catalyst components (h) and (i) were prepared in the same manner as in Example 1, except that the BEM was replaced by the organomagnesium compound shown below.

| Example No. | Catalyst component | Organomagnesium compound | Titanium content (%) |
|---|---|---|---|
| 15 | (h) | di-n-butyl Mg (7.5 mol)-TEAL (1.0 mol) complex | 5.5 |
| 16 | (i) | Ethyl MgCl | 3.7 |

Copolymerization of ethylene and propylene

Copolymerization of ethylene and propylene was performed in the same manner as in Example 1, except that the catalyst components obtained as mentioned above were used and the conditions of copolymerization were changed as shown in Table 1. The results are shown in Table 1.

Example 17

Preparation of catalyst component

Catalyst component (j) containing 5.4% of titanium was prepared in the same manner as in Example 1, except that the BEM was replaced by di-n-hexyl-Mg and the ethyl orthoformate was replaced by ethyl orthoacetate.

Copolymerization of ethylene and propylene

Copolymerization of ethylene and propylene was performed in the same manner as in Example 1, except that the catalyst component (j) was used and the conditions of copolymerization were changed as shown in Table 1. The results are shown in Table 1.

Example 18

Preliminary polymerization of ethylene

In a 200-ml flask equipped with a stirrer, with the atmosphere therein completely replaced with nitrogen, were placed 100 ml of heptane and 1 g of catalyst component (a) prepared in Example 1 and 0.1 mmol of TEAL. Ethylene was introduced into the autoclave and the polymerization of ethylene was initiated at room temperature under normal pressure. 30 minutes later, the supply of ethylene was suspended, and the liquid phase was discarded. The solid phase was washed five times with 50 ml of n-hexane, followed by drying at room temperature. The product was found to contain 1.5 g of polyethylene per g of catalyst component (a).

Copolymerization of ethylene and propylene

Copolymerization of ethylene and propylene was performed in the same manner as in Example 1, except that the catalyst component prepared by preliminary polymerization as mentioned above was used and the conditions of copolymerization were changed as shown in Table 1. The results are shown in Table 1.

Examples 19 to 22

Preliminary polymerization of ethylene

The preliminary polymerization of ethylene was performed in the same manner as in Example 18, except that 0.5 g of catalyst component (b) prepared in Example 7 was used and 0.5 mmol of TEAL was used. The resulting catalyst component was found to contain 3.1 g of preliminary polymer per g of catalyst component (b).

Copolymerization of ethylene and propylene

Copolymerization of ethylene and propylene was performed in the same manner as in Example 1, except that the catalyst component prepared as mentioned above was used and the conditions of copolymerization were changed as shown in Table 1. The results are shown in Table 1.

Example 23

Gas-phase polymerization of ethylene and propylene

Into a 5-liter autoclave equipped with a stirrer, with the atmosphere therein completely replaced by nitrogen, were placed 50 mg of catalyst component with preliminary polymerization obtained in Example 19 and 0.4 mmol of TEAL. Ethylene, propylene, and hydrogen were introduced into the system such that their molar ratio was kept at 40/58/2. Copolymerization of ethylene and propylene was performed at 60°C under a total pressure of 20 kg/cm$^2$. One hour later, the system was depressured and the resulting polymer was discharged. The results of copolymerization are shown in Table 1.

Comparative Example

Preparation of catalyst component

In a 200-ml flask equipped with a dropping funnel and stirrer, with the atmosphere therein replaced by nitrogen gas, were placed 0.7 g of anhydrous magnesium chloride and 40 ml of tetrahydrofuran. Then, 0.46 g of titanium tetrachloride was added dropwise over 30 minutes at room temperature. The reactants were heated at 60°C for 30 minutes to make a uniform solution.

8 g of the $SiO_2$ used in Example 1 (calcined at 600°C for 5 hours in a nitrogen atmosphere) was mixed with 50 ml of n-hexane. To the resulting slurry was added dropwise 3.1 ml of 20% hexane solution of TEAL over 15 minutes. Nitrogen gas was blown into the mixture at 60°C for 4 hours to give a free-flowing powder.

The thus treated $SiO_2$ powder was added to the solution obtained as mentioned above, followed by stirring for 15 minutes. Nitrogen gas was blown at 60°C for 4 hours to yield a dry, powdery catalyst component (m) containing 4.1% of titanium.

Copolymerization of ethylene and propylene

Copolymerization of ethylene and propylene was performed in the same manner as in Example 1, except that the catalyst component (m) was used and the molar ratio of ethylene to propylene was kept at 0.11. The results are shown in Table 1.

Table 1

| Example | Copolymerization temp. (°C) | Quantity of hydrogen used (ℓ) | Ethylene/propylene (molar ratio) | Polymerization activity (kg/g·cat·h) | Bulk density ($g/cm^3$) | Melt index (g/10 min) | Ethylene content (mol%) | Heat of fusion (cal/g) | True density ($g/cm^3$) |
|---|---|---|---|---|---|---|---|---|---|
| 1 | 20 | 0.1 | 0.10 | 26.3 | 0.33 | 0.23 | 55 | ~0 | 0.863 |
| 2 | 20 | 0.1 | 0.17 | 28.5 | 0.35 | 0.27 | 63 | ~0 | 0.865 |
| 3 | 20 | 0.5 | 0.28 | 31.1 | 0.37 | 0.68 | 76 | 0.5 | 0.875 |
| 4 | 40 | 0.1 | 0.30 | 67.8 | 0.30 | 0.42 | 68 | ~0 | 0.868 |
| 5 | 0 | 0.1 | 0.14 | 8.6 | 0.36 | 0.18 | 70 | 0.8 | 0.870 |
| 6 | 20 | 0.1 | 0.20 | 23.1 | 0.35 | 0.21 | 69 | 0.2 | 0.870 |
| 7 | 20 | 0.1 | 0.16 | 37.5 | 0.38 | 0.53 | 63 | ~0 | 0.864 |
| 8 | 20 | 0.1 | 0.22 | 36.1 | 0.38 | 0.32 | 71 | 0.3 | 0.870 |
| 9 | 40 | 0.1 | 0.32 | 82.4 | 0.31 | 0.73 | 70 | ~0 | 0.870 |
| 10 | 20 | 0.1 | 0.20 | 21.8 | 0.31 | 0.18 | 68 | 0.3 | - |
| 11 | 20 | 0.1 | 0.18 | 35.1 | 0.39 | 0.41 | 68 | 0.2 | - |
| 12 | 20 | 0.1 | 0.17 | 28.1 | 0.32 | 0.28 | 65 | ~0 | - |

Table 1 (continued)

| Example | Copolymerization temp. (°C) | Quantity of hydrogen used (ℓ) | Ethylene/propylene (molar ratio) | Polymerization activity (kg/g·cat·h) | Bulk density (g/cm³) | Melt index (g/10 min) | Ethylene content (mol%) | Heat of fusion (cal/g) | True density (g/cm³) |
|---|---|---|---|---|---|---|---|---|---|
| 13 | 20 | 0.1 | 0.18 | 39.2 | 0.35 | 0.54 | 63 | ~ 0 | - |
| 14 | 20 | 0.1 | 0.16 | 31.2 | 0.35 | 0.48 | 61 | ~ 0 | - |
| 15 | 20 | 0.1 | 0.19 | 23.5 | 0.38 | 0.27 | 70 | 0.4 | - |
| 16 | 20 | 0.1 | 0.10 | 35.1 | 0.32 | 0.31 | 51 | ~ 0 | - |
| 17 | 20 | 0.1 | 0.15 | 25.6 | 0.34 | 0.24 | 61 | ~ 0 | - |
| 18 | 40 | 0.1 | 0.32 | 61.4 | 0.34 | 0.51 | 71 | ~ 0 | - |
| 19 | 20 | 0.1 | 0.17 | 35.8 | 0.42 | 0.29 | 64 | ~ 0 | - |
| 20 | 20 | 0.1 | 0.12 | 38.1 | 0.40 | 0.24 | 57 | ~ 0 | - |
| 21 | 40 | 0.1 | 0.17 | 89.9 | 0.37 | 0.81 | 54 | ~ 0 | - |
| 22 | 60 | 0.05 | 0.30 | 172.5 | 0.31 | 0.45 | 62 | ~ 0 | - |
| 23 | 60 | 2 mol% | 0.69 | 42.4 | 0.42 | 0.56 | 69 | ~ 0 | - |
| Comparative Example | 40 | 0.1 | 0.12 | 3.1 | 0.21 | 0.03 | 71 | 0.7 | - |

## Claims

1. A process for producing an ethylene-propylene copolymer rubber containing 15-90 mol% of ethylene, said process comprising copolymerising ethylene and propylene in the presence of a polymerisation catalyst composed of a catalyst component and an organoaluminum compound, said catalyst component being obtained by contacting (A) a metal oxide, (B) an organomagnesium compound, and (C) a hydrocarbyloxy group-containing compound with one another, and contacting the thus obtained contact product with (D) a titanium compound.

2. A process for according to claim 1 wherein copolymerisation is conducted at from 0° C to 80° C.

3. A process according to claim 1 or 2 wherein copolymerisation is conducted at a pressure up to 60 atm.

4. A process according to claim 1, 2, or 3 wherein copolymerisation is conducted in the bulk phase in a propylene medium.

5. A process according to claim 4 wherein the ethylene/propylene molar ratio is from 0.01 to 1.0 (in liquid phase).

6. A process according to claim 1, 2 or 3 wherein copolymerisation is conducted in the gas phase.

7. A process according to claim 6 wherein the ethylene/propylene molar ratio is from 0.03 to 3.0.

8. A process according to any one of the preceding claims which excludes the step of removing catalyst from the copolymer product mixture.

FIG.1

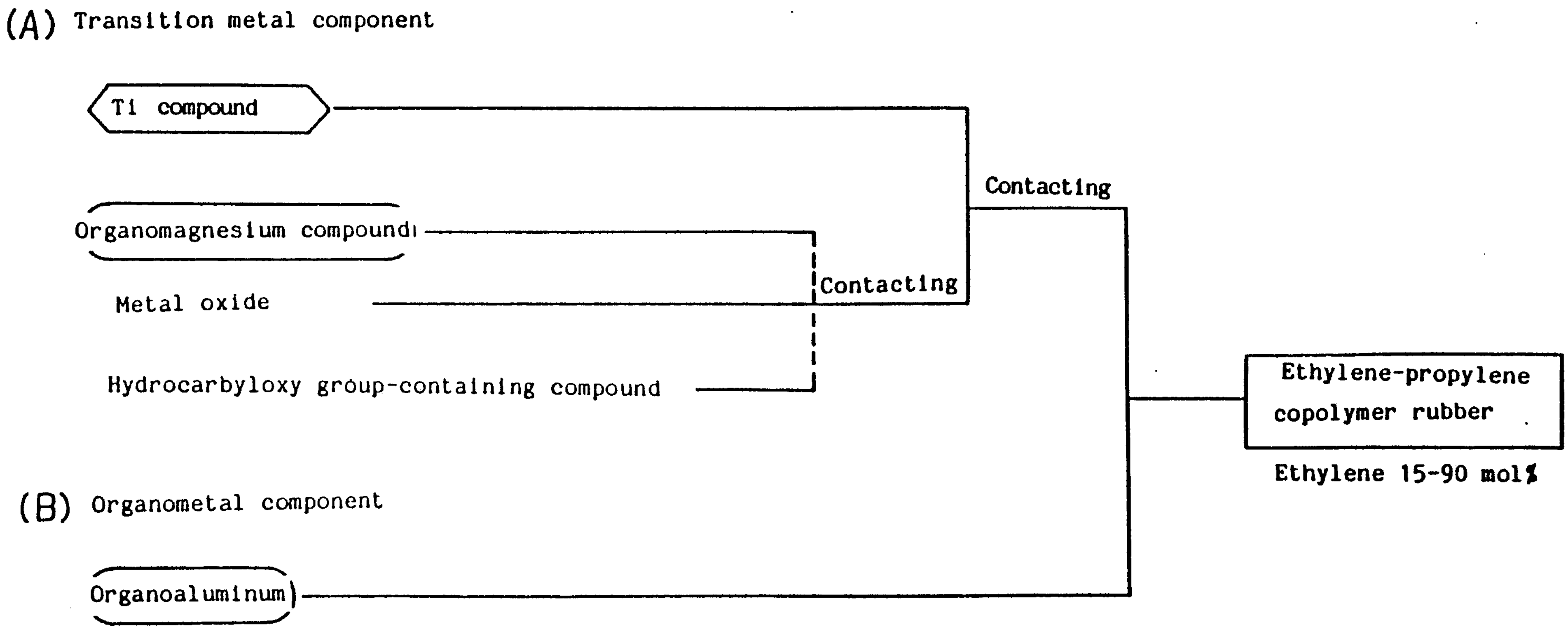
(A) Transition metal component
Ti compound
Organomagnesium compound
Metal oxide
Hydrocarbyloxy group-containing compound
Contacting
Contacting
(B) Organometal component
Organoaluminum
Ethylene-propylene copolymer rubber
Ethylene 15-90 mol%

European Patent Office

# EUROPEAN SEARCH REPORT

Application number

EP 87 30 5345

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,X | EP-A-0 173 470 (TOA NENRYO)<br>* Claims; page 14, line 5 - page 15, line 15 *<br>--- | 1-8 | C 08 F 210/16<br>C 08 F 4/64 |
| X | EP-A-0 014 523 (I.C.I.)<br>* Claims 1-4,8,13,15; page 9, lines 8,9,19-29; page 6, lines 31-32; page 13, line 11 - page 16, line 8 *<br>--- | 1-8 | |
| X | US-A-4 496 660 (D.E. GESSELL et al.)<br>* Claims 1,5,6; column 9, lines 3-19; column 14, lines 29-47 *<br>----- | 1-8 | |
| | | | TECHNICAL FIELDS SEARCHED (Int. Cl.4) |
| | | | C 08 F |

The present search report has been drawn up for all claims

| Place of search | Date of completion of the search | Examiner |
|---|---|---|
| THE HAGUE | 19-09-1987 | DE ROECK R.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document